# EUROPEAN PATENT APPLICATION

(11) **EP 0 585 060 A1**
(43) Date of publication of application: **02.03.1994**
(21) Application number: 93306578.1
(22) Date of filing: 19.08.1993
(51) Int. Cl.: A01B 17/00

(54) **Improvements relating to ploughs**

(30) Priority: 22.08.1992 GB 9217926
(71) Applicant: DOWDESWELL ENGINEERING CO. LTD., Stockton Nr. Rugby Warwickshire (GB)
(72) Inventor: Barrett, Eric James, Nr.Leamington Spa, Warwickshire CV33 9HZ (GB)
(74) Representative: Healy, Cecilia Patricia

(57) **Abstract**

An attachment for a plough comprises a flexible curtain (15) which is drawn over the ground immediately in front of a plough body (13,14) so as to flatten a tall standing crop or straw on the ground. The curtain (15) is fixed to a plough frame (16) which also carries the plough body (13,14). The plough body itself may comprise a small skimmer blade (13) moving in advance of the main plough blade (14), the arrangement being such that the tall standing straw or crop is dragged downwardly by the curtain (15) so that, as the plough body (13,14) cuts and turns the soil into a furrow, the standing straw or crop is rolled over and lands at the bottom of the furrow, leaving the surface of the field consisting of soil without substantial quantities of straw or crop visible. The arrangement enables the field to be further cultivated without the straw fouling the cultivating implements and is primarily for use with harvesters of the type known as stripper headers which merely cut the heads off the crop, leaving tall standing straw.

## Description

This invention relates to an improvement relating to ploughs which has been devised to overcome certain problems currently encountered in the ploughing of land having a tall standing crop.

Combine harvesters have customarily cut fields of grain close to the ground, leaving a short straw stubble which can readily be ploughed back into the ground.

More recently developed harvesters known as stripper headers are designed to cut the heads only off the crop, leaving tall standing straw. These harvesters have the advantage of being able to operate much more quickly than conventional combine harvesters but there is a problem of disposing of the tall standing straw.

If it is attempted simply to plough the field, the resulting ploughed surface has large amounts of projecting straw. As each furrow is formed, the soil is rolled over by the plough and the long ends of straw remain projecting at the surface.

Other alternatives such as burning the straw off are ecologically undesirable and may be prevented by law.

If large quantities of straw are left projecting on the surface of the ploughed field, difficulties are encountered in preparing the soil for another crop. The projecting straw ends interfere with a harrow or other cultivating implement.

Attempts have been made to roll the tall standing straw down onto the soil before ploughing but this has proved ineffective. Similarly disc cutting the standing straw is also ineffective. Both of these methods require a further operation to be carried out in addition to the normal ploughing.

It has also been proposed to drag a plurality of tines through the standing straw so as to flatten it, the tines being attached to the plough. However it has been found that the tines tend to pick up a substantial part of the standing straw and this builds up within the tines and clogs the plough, particularly when ploughing is carried out at anything other than a very slow speed.

It is an object of the present invention to provide a plough attachment capable of overcoming or reducing the problems associated with ploughing land carrying tall standing straw or a tall standing crop.

According to the invention there is provided a plough attachment comprising a flexible curtain adapted to be secured to a plough frame in front of a plough body, the curtain sweeping the region of soil through which the plough is to travel so as to flatten the standing straw or crop thereon.

Preferably, the curtain comprises a heavy flexible sheet material such as a rubber or plastics sheet. Alternatively it may comprise a flexible metal plate or a plurality of plates hinged or loosely pivoted to a frame of the plough.

It will be appreciated that where a number of plough bodies are provided on a plough frame, a corresponding plurality of curtains is also provided.

Each curtain has dimensions defined by the space between the plough bodies and is sufficiently long to trail on the ground without interfering with the subsequent ploughing.

The invention also provides a plough having an attachment as set out above.

An embodiment of the invention will now be described in more detail by way of example only with reference to the accompanying drawings in which,
Figure 1 illustrates a conventional ploughing operation carried out on tall standing straw.
Figure 2 illustrates the operation of a plough attachment according to the invention,
Figure 3 is a plan view of a plough frame illustrating the fixing of a curtain attachment.

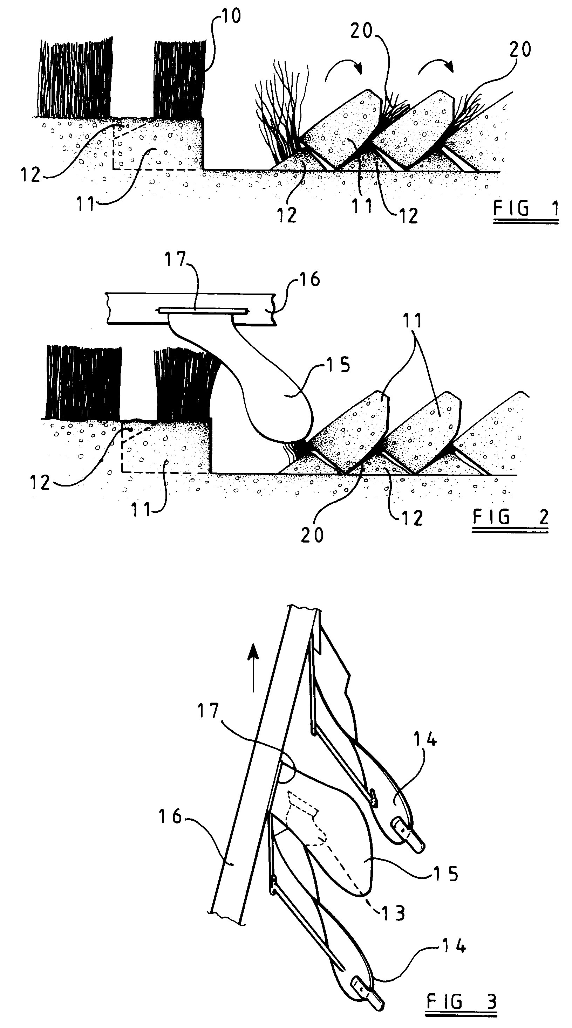

Referring to Figure 1 of the drawings, this shows in section a portion of a field having tall standing straw 10, ploughed by conventional methods. The section of soil which is turned by each portion of the plough is indicated in dotted lines at 11 with a small corner portion 12 being skimmed by the skimmer blade 13 shown in Figure 3 and the remainder of the soil 11 being turned by the main plough body 14. It will be seen from the cross-section of the ploughed field that the skimmed portion 12 lies upright in the bottom of the furrow with the straw projecting upwardly and the remaining part of the soil is turned over in the direction of the arrow so as to overlie the skimmed portion of the previous furrow, without entirely covering the straw. In this turning movement, the standing straw or crop 10 on the main section of soil is trailed behind and hence the tips still remain projecting out at 20 from the soil surface. This makes it very difficult to till the soil surface using a harrow or other cultivator.

Referring to Figure 3 of the drawings, the present invention contemplates using a curtain 15 in front of each plough body on the plough frame 16. The curtain 15 is of heavy rubber or plastics material, possibly with a fabric reinforcement. It is bolted at suitable centres 17 to the plough frame 16 and may be additionally secured by a chain (not shown) to the mount of the skimmer blade 13.

In operation, as the plough moves forwards in the direction shown in the arrow in Figure 3, the standing straw is firstly contacted by the curtain 15 which tends to flatten it obliquely, due to the geometric arrangement of the curtain 15 on the plough frame 16. As the skimmer cuts the corner portion 12 of the soil and drops this into the base of the furrow, the curtain drags down the standing straw so that it no longer stands upright in the furrow and the next portion 11 of soil is dropped on top of it. This means that the standing straw tips 20 have now been transferred to a flattened condition at the bottom of the furrow with the main portion of soil 11 being rolled over by the plough and placed on top of it.

It has been found that this soil surface can then be cultivated by conventional methods, for example using a harrow, without interference by the straw or other standing crop.

As an alternative to using a flexible rubber or plastics material for the curtain, it may be possible to use a flexible metal sheet or a plurality of overlapping or adjacent flexible metal strips, hinged or loosely pivoted to the plough frame, provided that the curtain can lift and swing freely in use. Thus it can ride over occasional field obstructions without damage and can react to localised clumps of straw or crop, afterwards falling back into place.

Although the invention has been described in relation to ploughing a field after the use of a header stripper, there may be other uses for the invention, in connection with tall standing crops. It may also find some usefulness in relation to cut crops or surface mulches which need to be incorporated into the soil.

## Claims

1. A plough attachment characterised in that it comprises a flexible curtain (15) adapted to be secured to a plough frame (16) in front of a plough body (13,14), the curtain (15) sweeping the region of soil through which the plough is to travel so as to flatten the standing straw or crop (10) thereon.

2. An attachment according to claim 1 further characterised in that the curtain (15) comprises a heavy flexible sheet material.

3. An attachment according to claim 2 wherein the material is rubber sheet.

4. An attachment according to claim 2 wherein the material is plastics sheet.

5. An attachment according to claim 1 further characterised in that the curtain comprises a flexible metal plate, hinged or loosely pivoted to the frame (16) of the plough.

6. A plough characterised in that it has an attachment according to any one of claims 1 to 5.

7. A plough according to claim 6 further characterised in that a plurality of curtains (15) are provided on the plough frame (16) corresponding in number to the plough bodies (13,14).

8. A plough according to claim 6 or claim 7 further characterised in that the or each curtain (15) has dimensions defined by the space between the plough bodies (13,14) and is sufficiently long to trail on the ground without interfering with the subsequent ploughing.

9. A plough according to any one of claims 6 to 8 further characterised in that the or each plough body comprises a skimmer blade (13) and a main plough blade (14) trailing the skimmer in the direction of movement of the plough and in that the curtain (15) immediately precedes the skimmer blade (13) whereby the standing crop or straw is flattened immediately before the skimmer reaches it during ploughing.
